# EUROPEAN PATENT APPLICATION

(11) **EP 4 752 762 A1**
(43) Date of publication of application: **03.06.2026**
(21) Application number: 24216109.9
(22) Date of filing: 28.11.2024
(51) Int. Cl.: G06F 21/30, G06F 21/32, G06F 21/44, H04L 9/40, H04W 12/68, H04W 12/79, H04W 12/065

(54) **COMPUTER-IMPLEMENTED AUTHENTICATION METHOD**

(71) Applicant: British Telecommunications Public Limited Company, London E1 8EE (GB)
(72) Inventor: CHOUHAN, Pushpinder Kaur, London, E1 8EE (GB); SELVAM, Muthupavithran, London, E1 8EE (GB); CUI, Zhan, London, E1 8EE (GB)
(74) Representative: British Telecommunications public limited company Intellectual Property Department

(57) **Abstract**

A computer-implemented authentication method comprising an authenticator: obtaining a user profile; obtaining a device profile in respect of a profiled device; obtaining authentication data based on output of a sensor; determining a user authentication result based on a comparison of the authentication data and the user profile; determining a device authentication result based on a comparison of the authentication data and the device profile; and causing a level of resource access to be granted to a current user of a functional device, through that functional device, in dependence on both the user authentication result and the device authentication result.

## Description

### FIELD

The present disclosure relates to authentication.

More specifically, aspects relate to a computer-implemented authentication method, a data processing system configured to perform such a method, a computer program comprising instructions which, when the program is executed by a computer, cause the computer to carry out such a method, a computer-readable data carrier having such a computer program stored thereon, and a data carrier signal carrying such a computer program.

### BACKGROUND

Authentication is often required in order to permit access to resources such as secure physical spaces, secure data, or secure device functionality. Authentication can be of a user's identity, and/or of a device's identity. Existing authentication schemes can however be cumbersome. What is needed is an improved authentication method, which suitably balances security with efficiency.

### SUMMARY

According to a first aspect, there is provided a computer-implemented authentication method comprising an authenticator:
obtaining a user profile;
obtaining a device profile in respect of a profiled device;
obtaining authentication data based on output of a sensor;
determining a user authentication result based on a comparison of the authentication data and the user profile;
determining a device authentication result based on a comparison of the authentication data and the device profile; and
causing a level of resource access to be granted to a current user of a functional device, through that functional device, in dependence on both the user authentication result and the device authentication result.

In some examples, the computer-implemented method further comprises the authenticator, after obtaining the authentication data:
processing the authentication data to extract a user signature; and
processing the authentication data to extract a device signature;
wherein:
the comparison of the authentication data and the user profile comprises a comparison of the user signature and the user profile; and
the comparison of the authentication data and the device profile comprises a comparison of the device signature and the device profile.

In some examples, processing the authentication data to extract the user and device signatures comprises time series analysis.

In some examples:
the sensor is a wireless transmission receiver;
the user signature comprises human activity recognition (HAR) data; and
the device signature comprises carrier-frequency offset (CFO) data.

In some examples, the device profile comprises calibration data for the sensor.

In some examples:
processing the authentication data to extract the user signature comprises compensating for the calibration data; and
processing the authentication data to extract the device signature comprises comparing the authentication data to the user signature.

In some examples, the user profile comprises biometric data captured using the sensor or another sensor configured to collect the same biometric.

In some examples, the sensor is a motion sensor.

In some examples, the authentication method is a continuous authentication method.

According to a second aspect, there is provided a data processing system configured to perform the method of any example in accordance with the first aspect.

According to a third aspect, there is provided a computer program comprising instructions which, when the program is executed by a computer, cause the computer to carry out the method of any example in accordance with the first aspect.

According to a fourth aspect, there is provided a computer-readable data carrier having stored thereon the computer program of any example in accordance with the third aspect.

According to a fifth aspect, there is provided a data carrier signal carrying the computer program of any example in accordance with the third aspect.

### BRIEF DESCRIPTION OF THE FIGURES

Aspects of the present disclosure will now be described by way of example with reference to the accompanying figures. In the figures:
Figure 1 illustrates an example computer-implemented authentication method;
Figure 2 illustrates an example computer-implemented sub-method;
Figure 3 functionally illustrates the entities involved in the proposed method;
Figure 4 schematically illustrates an example data processing system.

### DETAILED DESCRIPTION

It is proposed herein to authenticate a current user of a device for access to secure resources via authentication of both the user's identity, and a device's identity, using the same sensor data in both cases. In this way, two-factor authentication is provided with efficient use of sensor resources.

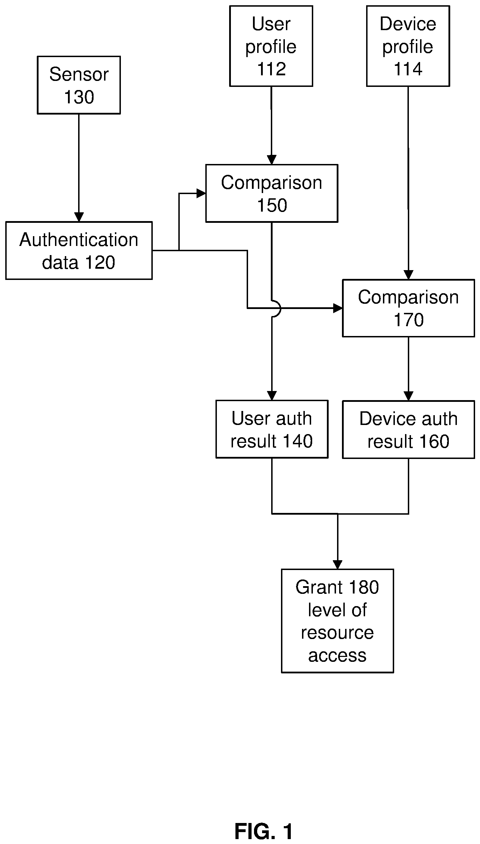

Figure 1 illustrates an example computer-implemented authentication method. A user profile 112 and a device profile 114 are both obtained, for example via retrieval from memory and/or measurement. Authentication data 120 is obtained based on output of a sensor 130. A user authentication result 140 is then determined based on a comparison 150 of the authentication data 120 and the user profile 112. Similarly, a device authentication result 160 is determined based on a comparison 170 of the authentication data 120 and the device profile 114. A level of resource access is then granted 180 to a current user of a device in dependence on both the user authentication result 140 and the device authentication result 160. Available levels of resource access can be binary, i.e. access permitted or denied, or more granular, e.g. with several different levels of access to data and/or functionality available depending on a determined confidence that both the device and the user are authentic, or determined confidences that each of the device and the user are authentic.

The authentication method can be a 'one-shot' authentication process performed once per session, for example to permit the current user to log in to a system or device, or in response to a user request for specific access and/or functionality. Alternatively, the authentication method can be a 'continuous' authentication method, performed 'in the background' on an ongoing basis to repeatedly authenticate the current user without any dedicated action from them.

The user profile 112 can for example comprise biometric data captured using the sensor 130, or another sensor configured to collect the same biometric(s).

The device profile 114 can for example comprise calibration data for the sensor 130. That is, unintentional variation in performance between individual sensors manufactured to be identical may already be determined and compensated/accounted for via a calibration process. Sensor performance data collected for calibration purposes can therefore efficiently be re-used as/in a device profile 114 in methods described herein.

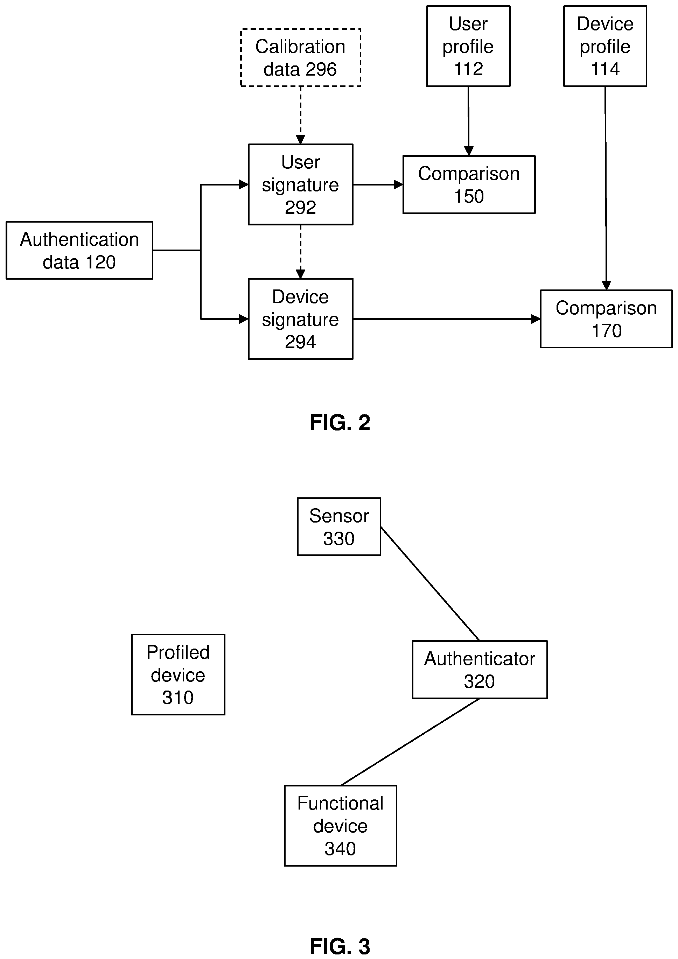

Figure 2 illustrates an example computer-implemented sub-method which can optionally be performed as part of the example method illustrated by Figure 1. After obtaining the authentication data 120, it is processed to extract a user signature 292 and a device signature 294. The comparison 150 of the authentication data 120 and the user profile 112 then comprises a comparison of the user signature 292 and the user profile 112. Similarly, the comparison 170 of the authentication data 120 and the device profile 114 comprises a comparison of the device signature 294 and the device profile 114.

Processing the authentication data 120 to extract the user signature 292 and the device signature 294 can comprise time series analysis, such as Fourier analysis. This may for example be appropriate when the sensor outputs a data stream having a relatively high frequency component attributable to the sensor itself, and a relatively low frequency component attributable to presence of the current user (or vice-versa). Those components can therefore be isolated using time series analysis. Similarly, this approach may be appropriate when the sensor outputs a data stream having a relatively low amplitude component attributable to the sensor itself, and a relatively high amplitude component attributable to presence of the current user (or vice-versa).

Processing the authentication data 120 to extract the user signature 292 can optionally comprise compensating for sensor calibration data 296, in the same manner as a sensor calibration process. (Thus, any sensor calibration process already performed to enable use of the sensor output for other purposes can efficiently be piggybacked on for these purposes.) That is, the component of the authentication data 120 attributable to sensor variation (on the assumption that the identity of the sensor 130 will be authenticated) is stripped out, leaving a component 292 attributable to the presence of the current user.

Processing the authentication data 120 to extract the device signature 294 can then optionally comprise comparing the authentication data 120 to the user signature 292, as indicated by the lower dashed arrow in Figure 2. That is, the component 292 of the authentication data 120 attributable to the presence of the current user is stripped out, leaving a component 294 attributable to the sensor itself.

As noted above, the device profile 114 can comprise the calibration data 296, thus a variation on Figure 2 could be drawn for some examples in which a single box replaces boxes 296 and 114, with arrows directed therefrom to both boxes 292 and 170.

Figure 3 functionally illustrates the entities involved in the proposed method. The 'profiled device' 310 is the device the device profile characterises. The authenticator 320 is the device that performs the computer-implemented method. The sensor 330 is the device whose output the authentication data is based on. The 'functional device' 340 is the device the appropriate level of resource access is provided through. The four entities shown in Figure 3 can all be separate from one another, so long as the authenticator 320 is in communication with each of the sensor 330 and the functional device 340. Alternatively, two or three of the functions provided by those four entities can be combined into a single physical device, so long as the authenticator 320 is comprised in a distinct device from the profiled device 310 (since the profiled device 310 cannot authenticate itself). Thus, the four entities shown in Figure three can be comprised in two, three, or four distinct physical devices.

In a first example implementation, the sensor 130/330 is a motion sensor. This can for example be a micro-electromechanical systems (MEMS) sensor, e.g. comprising a 3-axis accelerometer, and a 3-axis gyroscope. It can for example be comprised in a wearable user device such as a smartwatch. In this case, the authentication data 120 may comprise a signal having relatively small amplitude, high frequency components which uniquely identify the individual sensor 130/330, and relatively large amplitude, low frequency components which are a biometric uniquely identifying the user wearing/carrying the device in which the sensor 130/330 is comprised. A user signature 292 and device signature 294 can be extracted from the authentication data 120 using Fourier analysis. Secure functionality of the wearable device, e.g. contactless payment, may be permitted only when both the user authentication result 140 and the device authentication result 160 are positive. In this example, the wearable device is both the profiled device 310, and the functional device 340, and comprises the sensor 330. The authenticator 320 is a data processing system in communication with the wearable device, for example a remote server.

In a second example implementation, the sensor 130/330 is a wireless transmission receiver, for example comprised in a Wi-Fi access point. In this case, the user signature 292 can comprise human activity recognition (HAR) data which uniquely identifies the current user, and the device signature can comprise carrier-frequency offset (CFO) data which uniquely identifies a device communicating with that receiver, such as a smartphone. Secure functionality of the smartphone, e.g. viewing of secure documents, may be permitted only when both the user authentication result 140 and the device authentication result 160 are positive. In this example, the access point is the authenticator 320, and comprises the sensor 330, while the smartphone is both the profiled device 310, and the functional device 340.

In a third example implementation, similar to the second, secure functionality of another device local to the receiver, for example purchase of media content via a smart television connected to the Wi-Fi access point, may only be permitted when both the user authentication result 140 and the device authentication result 160 are positive. In this example, the access point is the authenticator 320, and comprises the sensor 330, while the smartphone is the profiled device 310, and the smart television is the functional device 340.

### Suitable data processing system

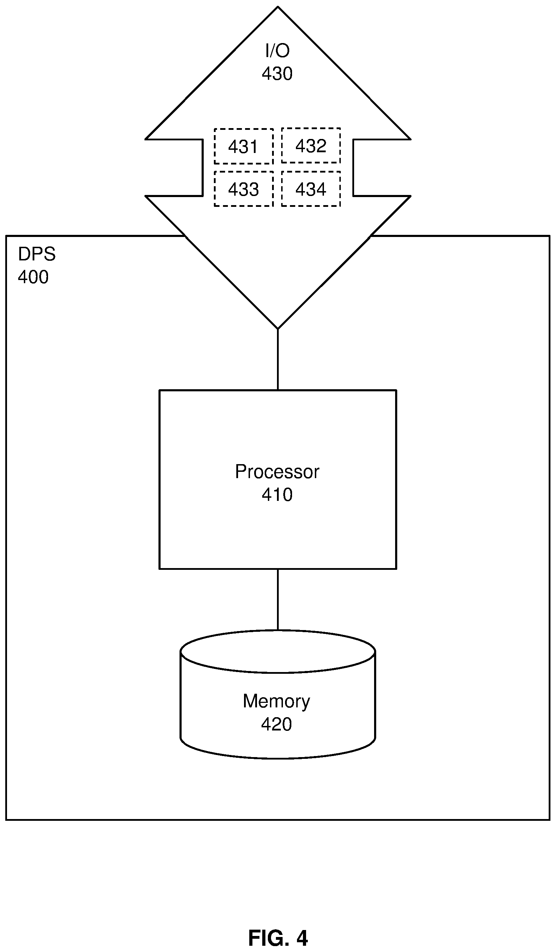

Figure 4 schematically illustrates an example data processing system (DPS) 400 capable of performing any of the methods described above. It comprises a processor 410 operably coupled to both a memory 420 and an interface (I/O) 430.

The memory 420 can optionally comprise computer program instructions which, when the program is executed by the processor 410, cause the data processing system 400 to carry out any of the methods described above. Alternatively or additionally, the interface 430 can optionally comprise one or both of a physical interface 431 configured to receive a data carrier having such instructions stored thereon and a receiver 432 configured to receive a data carrier signal carrying such instructions.

The receiver 432, when present, can be configured to receive messages. It can comprise one or more wireless receiver modules and/or one or more wired receiver modules. The interface 430 can optionally comprise a transmitter 433 configured to transmit messages. The transmitter 433, when present, can comprise one or more wireless transmitter modules and/or one or more wired transmitter modules.

The interface 430 can optionally comprise one or more user interface devices 434.

### INTERPRETATION NOTES

The preceding description is presented to enable any person skilled in the art to make and use the system and/or perform the method of the invention, and is provided in the context of a particular application. Various modifications to the disclosed examples will be readily apparent to those skilled in the art. It is intended that the specification be considered as exemplary only.

The phrase "consisting of" is intended to mean "including only". The word "comprising" is intended to mean "including at least", and therefore includes, in a limiting case, "consisting of".

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments. For example, steps presented as occurring in series can, given appropriate means (e.g. parallel processors), be implemented in parallel, and vice-versa.

The scope of the present invention includes any novel features or combination of features disclosed herein. The applicant hereby gives notice that new claims may be formulated to such features or combination of features during prosecution of this application or of any further applications derived therefrom. In particular, with reference to the appended claims, features from dependent claims may be combined with those of the independent claims and features from respective independent claims may be combined in any appropriate manner and not merely in the specific combinations enumerated in the claims.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Resources/computing resources, as referred to herein, comprise time, electrical power, processing power, and memory (both storage and working memory).

User devices can include, without limitation, static user devices such as PCs and mobile user devices such as smartphones, tablets, laptops, and smartwatches.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

User input devices can include, without limitation: microphones, buttons, keypads, touchscreens, touchpads, trackballs, joysticks, mice, gesture control devices and brain control (e.g. electroencephalography, EEG) devices. User output devices can include, without limitation: speakers, buzzers, display screens, projectors, indicator lights, haptic feedback devices and refreshable braille displays. User interface devices can comprise one or more user input devices, one or more user output devices, or both.

## Claims

1. A computer-implemented authentication method comprising an authenticator:
obtaining a user profile;
obtaining a device profile in respect of a profiled device;
obtaining authentication data based on output of a sensor;
determining a user authentication result based on a comparison of the authentication data and the user profile;
determining a device authentication result based on a comparison of the authentication data and the device profile; and
causing a level of resource access to be granted to a current user of a functional device, through that functional device, in dependence on both the user authentication result and the device authentication result.

2. The computer-implemented method of claim 1, further comprising the authenticator, after obtaining the authentication data:
processing the authentication data to extract a user signature; and
processing the authentication data to extract a device signature;
wherein:
the comparison of the authentication data and the user profile comprises a comparison of the user signature and the user profile; and
the comparison of the authentication data and the device profile comprises a comparison of the device signature and the device profile.

3. The computer-implemented method of claim 2, wherein processing the authentication data to extract the user and device signatures comprises time series analysis.

4. The computer-implemented method of claim 2, wherein:
the sensor is a wireless transmission receiver;
the user signature comprises human activity recognition, `HAR', data; and
the device signature comprises carrier-frequency offset, 'CFO', data.

5. The computer-implemented method of any of claims 1 to 4, wherein the device profile comprises calibration data for the sensor.

6. The computer-implemented method of claim 5 as dependent directly on claim 2, wherein:
processing the authentication data to extract the user signature comprises compensating for the calibration data; and
processing the authentication data to extract the device signature comprises comparing the authentication data to the user signature.

7. The computer-implemented method of any preceding claim, wherein the user profile comprises biometric data captured using the sensor or another sensor configured to collect the same biometric.

8. The computer-implemented method of any of claims 1 to 3, or 5 to 7, wherein the sensor is a motion sensor.

9. The computer-implemented method of any preceding claim, wherein the authentication method is a continuous authentication method.

10. A data processing system configured to perform the method of any preceding claim.

11. A computer program comprising instructions which, when the program is executed by a computer, cause the computer to carry out the method of any of claims 1 to 9.

12. A computer-readable data carrier having stored thereon the computer program of claim 11.

13. A data carrier signal carrying the computer program of claim 11.
